# EUROPEAN PATENT SPECIFICATION

(11) **EP 0 607 032 B1**
(45) Date of publication and mention of the grant of the patent: **13.05.1998**
(21) Application number: 94300212.1
(22) Date of filing: 12.01.1994
(51) Int. Cl.: H02K 11/00

(54) **Miniature motor**
Miniaturmotor
Moteur miniature

(30) Priority: 14.01.1993 JP 672/93
(43) Date of publication of application: 20.07.1994
(73) Proprietor: MABUCHI MOTOR KABUSHIKI KAISHA, Matsudo-shi, Chiba-ken (JP)
(72) Inventor: Shibata, Hisashi, c/o Mabuchi Motor K.K., Inba-gun, Chiba-ken (JP); Egawa, Yoshiaki, c/o Mabuchi Motor K.K., Inba-gun, Chiba-ken (JP); Sasaki, Norihiro, c/o Mabuchi Motor K.K., Inba-gun, Chiba-ken (JP)
(74) Representative: Hitchcock, Esmond Antony

(56) References cited:
- EP-A- 0 509 683
- GB-A- 2 222 730
- US-A- 3 048 722
- US-A- 4 571 561

## Description

This invention relates to a miniature motor for use for example, in audio and video equipment, and automotive electrical equipment.

It is known to include in miniature motors components for minimising or preventing the generation of electrical noise. For example, a ground terminal can be used, connecting one of the motor terminals to the motor housing, or a capacitor can be connected between the terminals. These devices take up substantial space either internally or externally of the motor and, particularly where a capacitor is installed, known uses thereof involve relatively complex manufacturing steps.

European Specification No. 0,509,683 discloses an electric motor in which a capacitor is connected to an input terminal and held against the inside of the case cover by a spring member.

The present invention is directed at a miniature motor which incorporates a noise reduction mechanism with a small space requirement and which is easy to assemble as part of the motor manufacturing process. Such a motor comprises a tubular housing having a closed end; a permanent magnet fitted in the housing; a rotor having an armature and a commutator; an end cap engaging the open end of the housing, and supporting brushes making sliding contact with the commutator and connected to motor terminals; a capacitor connected between the terminals; and bearings supporting the rotor for rotation in the housing. According to the invention the end cap is formed with a pair of first grooves for receiving respective motor terminals and a second groove which extends between the first grooves, an electrically conductive spring and the capacitor being disposed in the second groove in contact with each other and with a respective terminal. The second groove is normally oriented in a plane parallel to the axis of the motor with its open face directed towards the closed end of the motor housing. The capacitor is preferably a chip laminated capacitor, and the spring U-shaped in planar projection, with its plane aligned with that of the second groove.

Some examples of prior art motors,and an embodiment of the present invention will now be described by way of example and with reference to the accompanying drawings wherein:
Figure 1 is a partial cross-sectional side view illustrating a known miniature motor construction;
Figure 2 is a plan view showing a known electrical noise reduction mechanism applied to a motor of the kind shown in Figure 1;
Figure 3 is a plan view showing another known electrical noise reduction mechanism applied to a motor of the kind shown in Figure 1;
Figure 4 is an inside elevation of an end cap embodying the present invention;
Figure 5 is a sectional view taken on line A-A of Figure 4; and
Figure 6 is an exploded perspective view illustrating the components comprising the end cap shown in Figures 4 and 5.

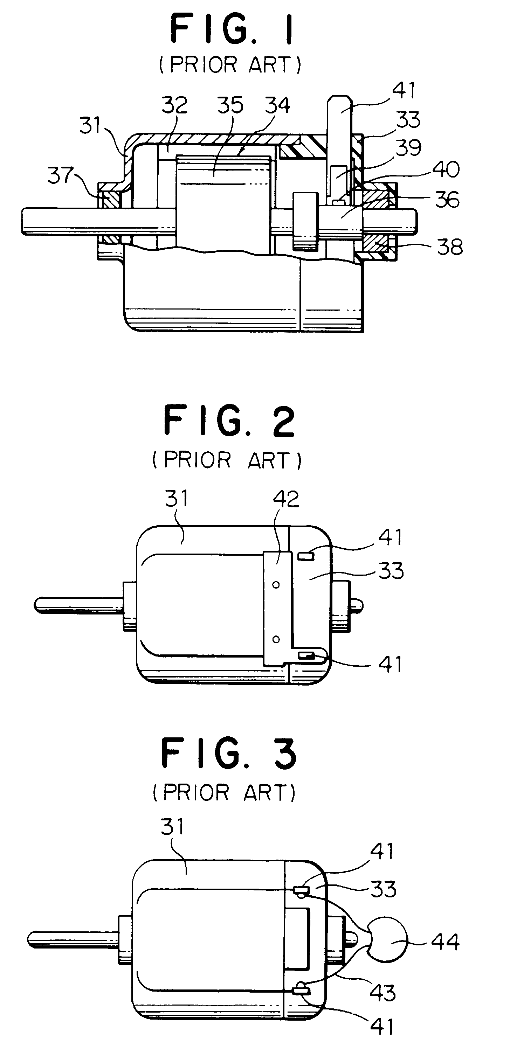

As shown in Figure 1, a housing 31 made of a metallic material, such as mild steel, is formed into a bottomed hollow tubular shape and has a permanent magnet 32 of an arc-segment shape, for example, fixedly fitted to the inner circumferential surface thereof. An end cap 33 made of a thermoplastic resin material, for example, is formed in such a fashion as to engage with an open end of the housing 31. A rotor 34 consisting of an armature 35 facing the permanent magnet 32 and a commutator 36, is rotatably supported by bearings 37 and 38 provided on the housing 31 and the end cap 33.

A brush arm 39 made of an electrically conductive material, formed into a strip shape, and having a brush 40 making sliding contact with the commutator 36, is provided inside the end cap 33. The end cap 33 also supports a pair of terminals 41 electrically connected to the brush arms 39 for the transmission of power from an external d-c power source to the armature 35 via the brush arms 39, the brushes 40 and the commutator 36, to actuate the motor in the conventional manner, and drive equipment connected to the rotor 34.

To reduce electrical noise in the motor of Figure 1, the housing 31 may be connected to one terminal 41 via a ground terminal 42 made of an electrical conductive material and formed into a flat sheet shape, as shown in Figure 2. In an alternative arrangement, a capacitor 44 is connected across the terminals 41 via a lead wire 43, as shown in Figure 3.

Other known motor constructions are known from examples of EP-A-509683; GB-A-2172754; GB-A-2173648; and GB-A-2103042.

In the constructions shown in Figures 2 and 3, the ground terminal 42, the capacitor 44 and other component members for reducing electrical noise, require additional space to be provided inside the equipment or system which is driven by the miniature motor. Furthermore, a space larger than necessary may have to be provided because the shape, size and mounting position of the component members for reducing electrical noise are uncertain.

Since the component members for reducing electrical noise are often not interchangeable, separate jigs, tools and personnel have to be provided if multiple types of such members are needed. This lowers production efficiency.

In the construction shown in Figure 3, the operation of connecting the lead wire 43 of the capacitor 44 to the terminal 41 is extremely time-consuming. The soldering operation inevitably needed for wire connections, and the placement and cutting of the lead wires 43 involve a high degree of skills particularly because of the very limited space around the location at which the capacitor 44 is installed. This increases assembly time and manhours, and hence increased manufacturing cost. In addition, soldering in a limited space can result in unstable wire connections, lowering their resistance to vibration or impact during service. This reduces the reliability of the motor.

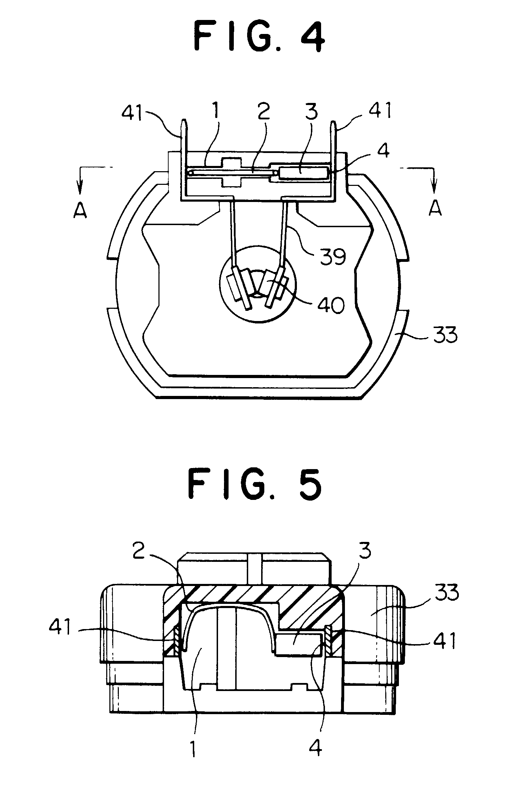

In the embodiment of the invention shown in Figures 4 and 5 a groove 1 is provided on the inside end face of the end cap 33. The groove 1 includes a plane parallel to the axial line of the motor, and formed into a flat shape in such a manner to open towards the motor housing 31. The side surfaces of the terminals 41 are brought into contact with the side surfaces of the groove 1.

A spring 2 made of an electrically conductive material, such as copper or a copper alloy, formed into a substantially U shape in planar projection, and fitted into the groove 1 towards one end thereof. A chip laminated capacitor 3 formed into a thin rectangular parallelopiped shape, for example, is fitted into the groove 1 towards the other end thereof. The chip laminated capacitor 3 is thus urged into contact with one terminal 41 by the resiliency of the spring 2, which is itself in contact with the other terminal. In this way, the spring 2 and the chip laminated capacitor 3, form a circuit for reducing electrical noise. Projections 4 are preferably provided on the inside surface of the terminals 41 to ensure electrical connection with the spring 2 and the chip laminated capacitor 3.

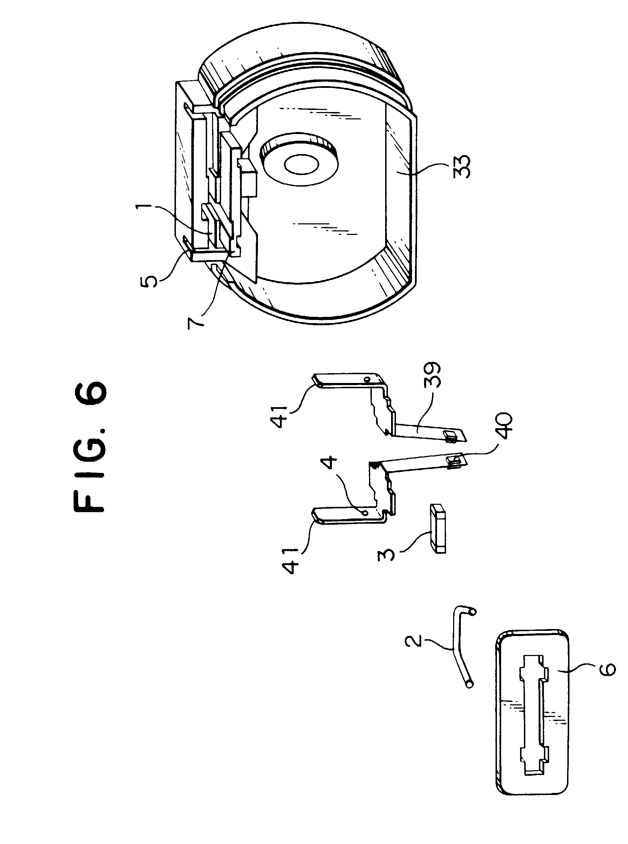

Figure 6 illustrates the assembly of the end cap 33 shown in Figures 4 and 5. When the terminals 41 formed into a substantially L shape and connected to the brush arms 39 are forced from the side of the inside end face of the end cap 33 into grooves 5 in the body of the end cap 33, they also traverse the groove 1 such that their side surfaces face each other along the groove 1. When the chip laminated capacitor 3 is inserted into the groove 1 against the positive terminal 41 (right in Figure 6), and the spring 2 is inserted between the capacitor 3 and the negative terminal 41 (left in Figure 6), the elastic force of the spring 2 urges the chip laminated capacitor 3 into engagement with one terminal 41, and the spring 2 itself resiliently engages the other terminal, ensuring electrical connections therebetween. An insulating plate 6 is fitted to a projection 7 provided integrally on the inside end face of the cap 33 to prevent the terminals 41, the chip laminated capacitor 3 and the spring 2 from leaving the groove 1 and short-circuiting with the housing 31.

This invention as illustrated in the foregoing description offers the following benefits:
(1) By fitting the capacitor between the terminals, electrical noise can be reduced, and the performance of miniature motors can be improved.
(2) Since the capacitor is incorporated within the body of the end cap, no excess space is needed outside the miniature motor, and thus it is possible to reduce the size thereof, and the space requirement therefor.
(3) Because component members can be easily assembled, manufacturing cost can be reduced and productivity can be improved.
(4) Since the preferred spring for holding the capacitor can be formed merely by cutting and bending wire, fabrication cost is low.

## Claims

1. A miniature motor comprising a tubular housing (31) having a closed end; a permanent magnet (32) fitted in the housing (31); a rotor (34) having an armature (35) and a commutator (36); an end cap (33) engaging the open end of the housing (31), and supporting brushes (39) making sliding contact with the commutator (36) and connected to motor terminals (41); a capacitor (3) connected between the terminals (41); and bearings (37,38) supporting the rotor (34) for rotation in the housing (31)
CHARACTERISED IN THAT
the end cap (33) is formed with a pair of first grooves (5) for receiving respective motor terminals (41) and a second groove (1) which extends between the first grooves, an electrically conductive spring (2) and the capacitor (3) being disposed in the second groove (1) in contact with each other and with a respective terminal (41).

2. A miniature motor according to Claim 1 wherein the second groove (1) is oriented in a plane parallel to the axis of the motor with its open face directed towards the closed end of the motor housing (31).

3. A miniature motor according to Claim 1 or Claim 2 wherein the capacitor (3) is a chip laminated capacitor.

4. A miniature motor according to any preceding Claim wherein the spring is U-shaped in planar projection, with its plane aligned with that of the second groove (1).

5. A miniature motor according to any preceding Claim wherein the terminals (41) have projections (4) on their surfaces in contact with the spring (2) and capacitor (3).

6. A miniature motor according to any preceding Claim including an insulating plate (6) closing the open face of the second groove (1), and fitted on a projection (7) on the inside end face of the end cap (33).

## Patentansprüche

1. Ein Miniaturmotor, der ein röhrenförmiges Gehäuse (31) mit einer geschlossenen Seite aufweist; einen Permanentmagneten (32), der in dem Gehäuse (31) eingepaßt ist; einen Rotor (34), der einen Anker (35) und einen Kommutator (36) aufweist; eine Abschlußkappe (33), die in die offene Seite des Gehäuses (31) eingreift und die Bürsten (39) haitert, welche in Schleifkontakt mit dem Kommutator (36) stehen und mit den Anschlußklemmen (41) des Motors verbunden sind; einen Kondensator (3), der zwischen die Anschlußklemmen (41) geschaltet ist; und Lager (37,38), welche den Rotor (34) zur Rotation in dem Gehäuse (31) haltern,
**dadurch gekennzeichnet,**
daß die Abschlußkappe (33) mit einem Paar erster Rillen (5) zur Aufnahme der jeweiligen Anschlußklemmen (41) des Motor und mit einer zweiten Rille (1) ausgeführt ist, welche sich zwischen den ersten Rillen erstreckt, und daß eine elektrisch leitende Feder (2) und der Kondensator (3) in der zweiten Rille (1) in Kontakt miteinander und mit einer jeweiligen Anschlußklemme (41) angeordnet sind.

2. Ein Miniaturmotor nach Anspruch 1, wobei die zweite Rille (1) in einer zur Achse des Motors parallelen Ebene orientiert ist, wobei deren offene Fläche zu der geschlossenen Seite des Motorgehäuses (31) hin gerichtet ist.

3. Ein Miniaturmotor nach Anspruch 1 oder Anspruch 2, wobei der Kondensator (3) ein Mikrochip-Schichtkondensator ist.

4. Ein Miniaturmotor nach einem der vorhergehenden Ansprüche, wobei die Feder in ebener Projektion U-förmig ist, wobei ihre Ebene mit jener der zweiten Rille (1) ausgerichtet ist.

5. Ein Miniaturmotor nach einem der vorhergehenden Ansprüche, wobei die Anschlußklemmen (41) Vorsprünge (4) an ihren Oberflächen aufweisen, welche in Kontakt mit der Feder (2) und dem Kondensator (3) stehen.

6. Ein Miniaturmotor nach einem der vorhergehenden Ansprüche, der eine nichtleitende Platte (6) aufweist, welche die offene Fläche der zweiten Rille (1) verschließt und welche an einem Vorsprung (7) an der Innenfläche der Abschlußkappe (33) eingepaßt ist.

## Revendications

1. Moteur miniature comprenant un carter tubulaire (31) ayant une extrémité fermée, un aimant permanent (32) logé dans le carter(31), un rotor (34) ayant un induit (35) et un collecteur (36), un embout (33) se plaçant sur l'extrémité ouverte du carter (31) et supportant des balais (39) qui établissent un contact glissant avec le collecteur (36) et sont connectés aux bornes (31) du moteur, un condensateur (3) monté entre les bornes (41), et des roulements (37, 38) supportant le rotor (34) pour qu'il tourne dans le carter (31).
CARACTERISE EN CE QUE
l'embout 533) comporte une paire de premières gorges (5) servant à recevoir des bornes respectives (41) du moteur et une deuxième gorge (1) qui s'étend entre les premières gorges, un ressort électroconducteur (2) et le condensateur (3) étant disposés dans la deuxième gorge (1), au contact l'un de l'autre et d'une borne respective (41).

2. Moteur miniature selon la revendication 1, dans lequel la deuxième gorge (1) est orientée dans un plan parallèle à l'axe du moteur, sa face ouverte étant dirigée vers l'extrémité fermée du carter (31) du moteur.

3. Moteur miniature selon la revendication 1 ou la revendication 2, dans lequel le condensateur (3) est un condensateur pastille feuilleté.

4. Moteur miniature selon l'une quelconque des revendications précédentes, dans lequel le ressort est en forme de U en projection plane, son plan étant aligné avec celui de la deuxième gorge (1).

5. Moteur miniature selon l'une quelconque des revendications précédentes, dans lequel les bornes (41) ont des saillies (4) sur leurs surfaces au contact du ressort (2) et du condensateur (3).

6. Moteur miniature selon l'une quelconque des revendications précédentes, comprenant une plaque isolante (6) fermant la face ouverte de la deuxième gorge (1), et placée sur une saillie (7) de la face d'extrémité intérieure de l'embout (33).
